# EUROPEAN PATENT SPECIFICATION

(11) **EP 4 536 939 B1**
(45) Date of publication and mention of the grant of the patent: **03.12.2025**
(21) Application number: 23761565.3
(22) Date of filing: 12.06.2023
(51) Int. Cl.: F01D 5/16, B22F 5/04, B23K 35/02, B33Y 10/00, B33Y 80/00

(54) **TURBINE BLADE**
TURBINENSCHAUFEL
AUBE DE TURBINE

(30) Priority: 12.06.2022 PL 44145422
(43) Date of publication of application: 16.04.2025
(73) Proprietor: SIEC BADAWCZA LUKASIEWICZ-INSTYTUT LOTNICTWA, 02-256 Warszawa (PL)
(72) Inventor: MONETA, Grzegorz, 02-495 Warszawa (PL); FEDASZ, Michal, 00-055 Warszawa (PL); SZMIDT, Michal, 05-825 Ksiazenice (PL); CIESLAK, Slawomir, 20-560 Lublin (PL); KRZYMIEN, Wieslaw, 60-683 Poznan (PL)
(74) Representative: Wroblewski, Marcin Jan
(86) International application number: PCT/IB2023/056035
(87) International publication number: WO 2023/242707

(56) References cited:
- EP-A1- 3 473 807
- EP-A1- 3 513 903
- EP-A2- 0 926 312
- EP-B1- 3 018 292
- DE-A1- 102018 123 089
- US-A1- 2010 021 693
- US-A1- 2015 132 142
- US-A1- 2019 284 943
- US-A1- 2021 372 286
- US-A1- 2022 098 985

## Description

### Technical Field

The object of the invention is a turbine blade, in particular a blade for use in turbine engines and gas turbines.

### Background of the Invention

Since the beginning of the existence of turbojet engines, fatigue failure to the blades caused by vibrations was the main challenge in operating the engine. This problem has not yet been fully solved, since high cycle fatigue (HCF) is the main cause of failures of turbine engines. In the case of rotor blades, their vibrations lead to cyclic oscillations, which result in cyclic stresses and deformations under the difficult conditions of high centrifugal forces, high temperature and pressure. Such combination of medium stresses and an amplitude of stresses in the blades of rotor machines often leads to instability of operation of these devices and their malfunctions, in particular under the conditions of resonance.

Blade vibration amplitudes are usually reduced by the use of bandages, shelves or friction dampers below the root. Each of these solutions entails reduction in the performance of the machine, including disruption in the flow of gas, an increase in the load of the centrifugal force, and introduction of the risk of accelerated creep in the material of the element. Therefore, there is a search for solutions which would increase the damping of vibrations, in particular under the conditions of resonance, which would have minimal negative impact on the performance of the machine.

The patent application EP0926312A2 discloses a blade comprising a metal airfoil with first and second opposite sides extending radially between the root and the tip of the airfoil, and axially between a leading edge and a trailing edge. The airfoil further includes pockets disposed in the first side, having elastomeric fillers bonded therein. A panel is bonded to the filler along the pocket for allowing differential movement therebetween for damping the vibrations of the blade. Various kinds of vibrations are damped depending on the used elastomeric material. The filler may take any form such as an elastomeric-like rubber or fluorosilicone moulded and cured to bond in the pockets, the filler having lower density than the metal of which the airfoil is made. The use of the filler provides internal damping of the vibrations, which reduces the amplitude of vibrations of the airfoil during operation.

The patent description EP3018292B1 in turn discloses a turbine blade comprising a surface, a recess within the surface, and a damping inlay within the recess, wherein the damping inlay comprises a chamber and a damping material disposed within the chamber. The damping material can, e.g., have the form of powder.

The structural feature of the pockets with non-fused powder is the introduction of two main damping mechanisms. The first one is a change in the properties of the material between the solid area and the powder area-the wave propagates along various media causing changes in the propagation speed of the wave, and causing multiple reflections of the wave. The second damping mechanism is the dissipation of friction between the particles of powder. Unfortunately, the dissipation of energy in powder caused by relative movements between the particles is the most effective in areas close to the walls of the pockets, and drops in the centre of the pocket.

From the patent application DE102018123089A1 it is known a particle damper system comprising a base body with a cavity in which at least one spring element is arranged. Further, within the cavity the particles are arranged. The spring element is formed from at least one spring rod and at least one weight that is arranged at a first end of the spring rod. The at least one spring rod is fixed at its second end to an inner wall of the base body and is at least partially in contact with the particles. The particle damper system achieves a damping effect by dissipating the kinetic energy by the relative movement of the base body to the spring element. The particle damper system is to be fixed in or on a component and thus to dampen mechanical oscillations, which correspond to vibrations up to and including impacts, of the component. Examples of such components include those used in automobile construction or turbine housings.

The patent description US2021/372286 discloses a nested lattice structure for use in a damping system for a turbine blade comprising a first lattice structure and second lattice structure. A first lattice structure comprising a first and a second outer passage, wherein both include a hollow interior and an outer node including a hollow interior and forming an intersection of the first outer passage and the second outer passage. The nested lattice structure includes a second lattice structure nested within the hollow interior of the first lattice structure. Each of the first and second lattice structures dampen vibrations from the blade portion. By coupling each of the lattice structures, to only a single portion (albeit different portions) of the turbine blade, and by dimensioning the lattice structures to allow relative motion therebetween, the damping system may simultaneously dampen multiple vibratory modes from multiple locations on the turbine blade.

Therefore, it is desirable to develop such a technical solution which would allow for improving the dissipation of energy in the entire volume of powder in the pockets, and therefore increase the efficiency of damping the vibrations.

### The Essence of the Invention

The object of the invention is a turbine blade, in particular the blade of a turbine engine or a gas turbine, comprising a locking portion and an airfoil with a uniform structure, in which there is a plurality of pockets filled with powder. The essence of the invention is in that the plurality of pockets, are distributed in the volume of the airfoil in a matrix array, and said pockets comprise: at least one cuboid block connected to the airfoil, and cuboid blocks placed in the pockets have various dimensions, and at least one rod connected to the airfoil and/or at least one rod connected to the cuboid block.

The introduction of a pocket and/or pockets filled with powder, in which there are the cuboid block and the rods, into the volume of the blade allows for transferring the energy of vibrations into the entire volume of powder, making the damping of vibrations more effective. As a result, during vibrations of the blade, a considerable increase in the dissipation of energy in the powder is achieved, and therefore better damping of vibrations. The use of the described configuration significantly reduces the amplitudes of vibrations, primarily under the conditions of resonance, thus considerably reducing the risk of failure.

Preferably, both ends of the at least one rod are connected to the airfoil. Bilateral connection of the rods to the airfoil allows for damping vibrations with a higher frequency. The connection of only one end of the rod to the airfoil or to the cuboid block in turn allows for damping vibrations with lower frequencies.

It is preferable when at least one rod in the pocket connects the cuboid block to a wall of the pocket. Such arrangement of the rods improves the transfer of the energy of vibrations into the powder. At the same time, it allows for damping vibrations with an even higher frequency than in the case of bilateral connection of the rod to the airfoil.

It is desirable for the rods to be arranged substantially parallel with respect to each other, due to which the entire volume of powder is activated to absorb the energy of vibrations. This avoids the existence of locations in which there is no absorption of the energy of vibrations.

Preferably, the rods placed in the pockets have an = openwork structure. The openwork structure of the rods will increase the intensity of engagement between the powder and the rods, thus increasing the efficiency of damping.

It is the object of the invention for the cuboid blocks placed in the pockets to have various dimensions. A cuboid block with specific dimensions is characterized by a given frequency of damping vibrations, which is characteristic of it. The use of various dimensions of the cuboid blocks in the pockets results in damping a broad spectrum of resonance frequencies and forms of vibrations (intentional dephasing of vibrations).

It is the object of the invention that the turbine blade according to the invention comprises a plurality of pockets distributed in the entire volume of the airfoil, which allows for achieving a maximum damping effect.

The distribution of pockets in a matrix array is in turn the object of the invention from the point of view of static strength of the turbine blade due to its orientation parallel to the centrifugal force acting on the blade. Due to the technology of production, it is preferable when the pocket is filled with the material of which the airfoil is made, in pulverized form. This allows for achieving closed pockets, due to which the powder does not pour between the pockets, which could lead to is concentration in some pockets, leaving other pockets not filled.

Preferably, the airfoil, the cuboid block, and the rods form a monolithic element, which has a preferable effect on the efficiency of transferring the energy of vibrations into the volume of the powder-the wave propagates in a solid medium much better than in powder.

It is recommended for the turbine blade according to the invention to be made using an additive manufacturing technique, most preferably a Laser Powder Bed Fusion (LPBF) technique.

Preferably, the turbine blade is made of an alloy based on nickel, cobalt or tungsten (in military applications). When used in compressors, the turbine blade is in turn made of an alloy based on aluminium or magnesium. The turbine blade may also be made of steel.

### Advantages of the Invention

The solution according to the invention allows for transferring the energy of vibrations into the entire volume of powder, making the damping of vibrations more effective. As a result, during vibrations of the turbine blade, a considerable increase in the dissipation of energy is achieved in the powder, and therefore so is better damping of vibrations.

The solution according to the invention allows for considerable reduction in the amplitude of vibrations, primarily under the conditions of resonance, thus considerably reducing the risk of failure. The proposed solution according to the invention, which comprises pockets with powder comprising cuboid blocks and rods, provides excellent improvement in damping compared to solid parts, almost by two orders of magnitude.

The solution according to the invention allows for reducing the mass of the turbine blade. When using the solution according to the invention, it is possible to reduce the mass compared to the structure of a solid blade, at the same time improving the damping of vibrations.

Moreover, the solution according to the invention also allows for fine-tuning the frequencies of the damped vibrations without changing the airfoil blade profile.

The manufacturing of the blade using a Laser Powder Bed Fusion (LPBF) technique in turn allows for shortening the manufacturing time of the blade (a smaller volume of the element has to be fused, reducing the time of manufacturing).

### Description of the Drawings

The object of the invention is shown in embodiments in the drawing, in which:
- Fig. 1: presents schematically the turbine blade according to the invention, with visible pockets arranged in the airfoil volume of the turbine blade; for clarity of the figure, the powder is not visible;
- Fig. 2: presents schematically a sample pocket of the turbine blade according to the invention in one of the embodiments; for clarity of the figure, the powder is not visible;
- Fig. 3: presents schematically a sample pocket of the turbine blade according to the invention in one of the embodiments; for clarity of the figure, the powder is not visible;

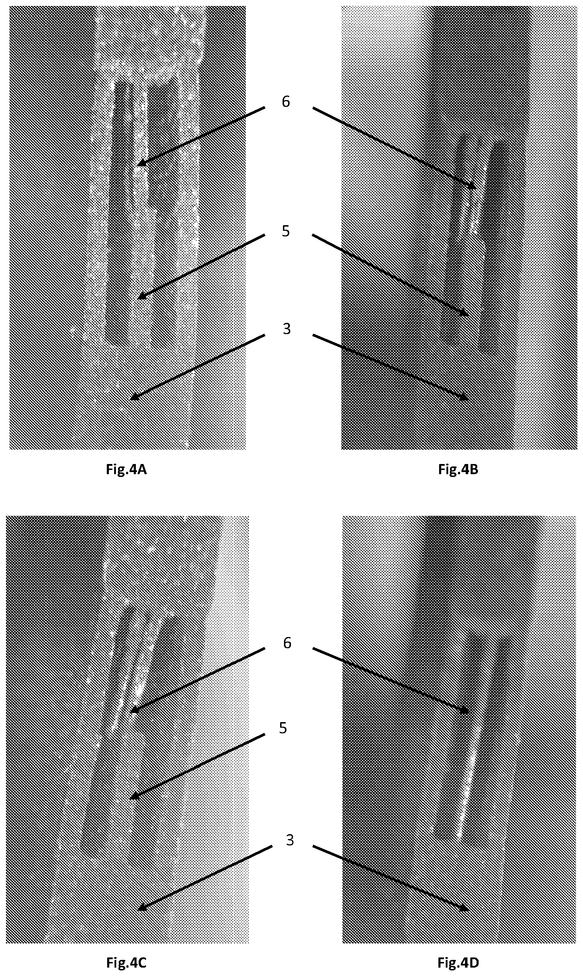

- Fig. 4: presents various views of fragments of the turbine blade according to the invention, in a longitudinal section across a pocket, upon cutting the element and pouring out the powder;

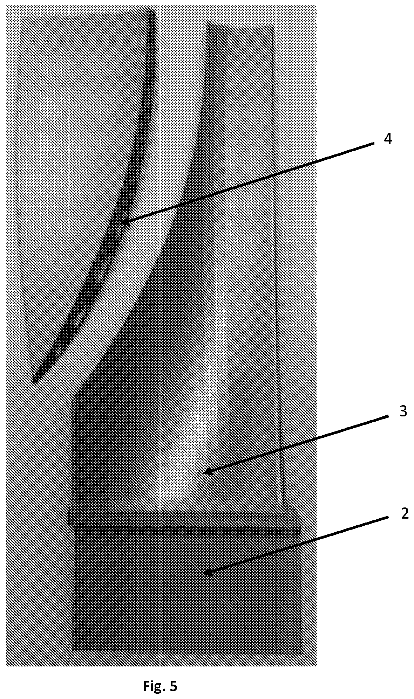

- Fig. 5: presents a cut turbine blade according to the invention;

### Detailed Description of the Invention-an Embodiment of the Invention

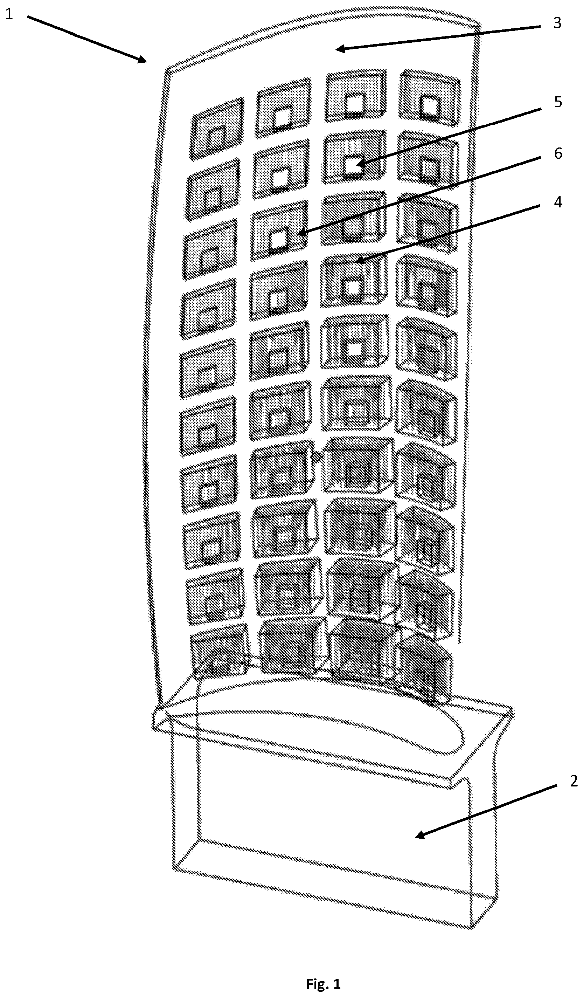

As presented in Fig. 1, the turbine blade 1, in particular the blade of a turbine engine or a gas turbine, comprises a locking portion 2 and an airfoil 3 with a uniform structure.

In the structure of the airfoil 3 there are a plurality of pockets 4, arranged in a matrix array, filled with non-fused powder of the material of which the turbine blade 1 is made. In this embodiment, the matrix array comprises four columns and ten rows. The number of pockets in other embodiments of the invention may vary, and their number, size, and position depend on the needs specified for a given turbine blade. The distribution of pockets 4 in the matrix array is preferable from the point of view of static strength of the blade. In the presented embodiment, the pockets 4 are distributed in the entire volume of the airfoil 3, which has preferable impact on maximizing the damping effect.

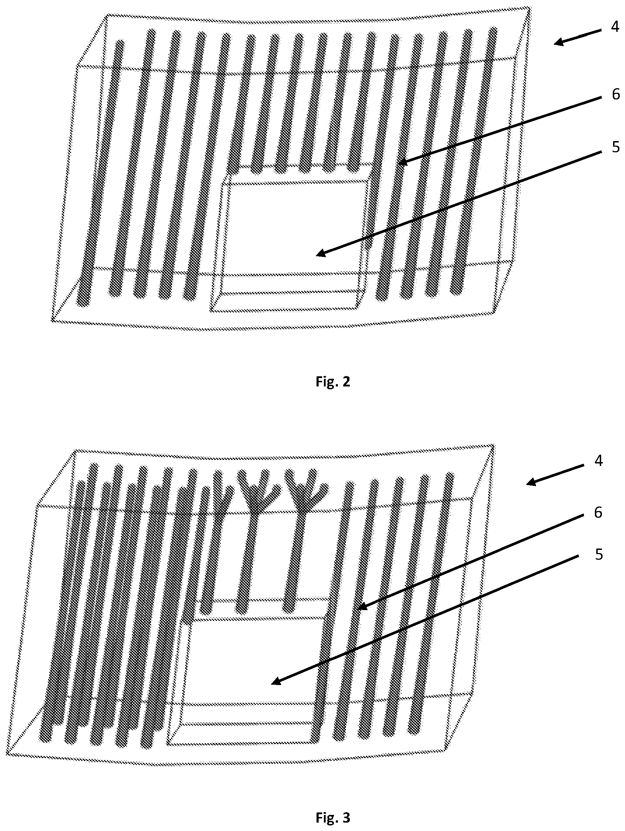

In the pockets 4, there are cuboid blocks 5 connected to the airfoil 3. In the pockets 4, there are also rods 6 connected to the airfoil 3, and rods 6 connected to the cuboid block 5. Sample views of the pockets 4 are presented in Figs. 2 and 3. The rods 6 can also have an openwork structure.

The cuboid blocks 5 placed in the pockets 4 have various dimensions. A cuboid block with specific dimensions is characterized by a given frequency of damping vibrations, which is characteristic of it. The use of various dimensions of cuboid blocks in the pockets results in damping a broad spectrum of resonance frequencies and forms of vibrations (intentional dephasing of vibrations).

Some of the pockets comprise rods 6, some of which have both ends connected to the airfoil 3, which enables damping vibrations with a higher frequency. The remaining part of the rods 6 connect the cuboid block 5 to the wall of the pocket 4, improving the transfer of energy into the powder.

Another part of the pockets 4 in turn comprises rods 6, whose only one end is connected to the airfoil 3 or to the cuboid block 5, which allows for damping vibrations of lower frequencies. The number and arrangement of the rods 6 in the pockets depend on the dimensions of the pockets.

The rods 6 are arranged substantially parallel with respect to each other, due to which the entire volume of the powder is 'activated', which means that its entire volume actively participates in the damping of vibrations. This prevents the existence of the so-called 'ineffective spaces', which do not participate in damping the vibrations. The number and arrangement of the rods 6 (rows/columns) depend on the size of the pocket. However, they are supposed to enable uniform transfer of wave energy to the volume of the non-fused powder.

The turbine blade 1 may be made of an alloy based on nickel, cobalt or tungsten (in the case of military applications). When used in compressors, the turbine blade may in turn be made of an alloy based on aluminum or magnesium. The turbine blade may also be made of steel, for example 316L, St12T, 17-4PH, St T17/13W, and 15-5PH steel.

The turbine blade 1 is formed using an additive manufacturing technique, and more precisely a Laser Powder Bed Fusion (LPBF) technique. The LPBF technology (Laser Powder Bed Fusion) is based on applying thin layers of metal powder, which powder is subsequently melted by means of a laser beam in accordance with the geometry of the manufactured element. Using the LPBF process, a turbine blade with unique inner geometry is manufactured, within which pockets 4 with cuboid blocks 5 and rods 6 are formed, which pockets 4 are filled with non-fused powder. During the manufacturing of the blade, the powder present in the location of the pocket 4 being formed does not undergo melting. As a result, the airfoil 3, the cuboid blocks 5, and the rods 6 form a monolithic element, and the non-fused powder remaining in the formed pockets ensures the damping of vibrations.

In the volume of the turbine blade 1 there are pockets 4 in which there are the cuboid block 5 and the rods 6, surrounded by non-fused powder. During vibrations of the turbine blade 1, the energy is dissipated by friction between the powder particles. The rods 6 and the cuboid block 5 present in the pockets 4 cause transfer of the energy of vibrations into the entire volume of the powder, making the damping of vibrations more effective than in solutions known from prior art. The solution proposed in the present invention considerably reduces the amplitudes of vibrations, primarily under the conditions of resonance, thus considerably reducing the risk of malfunctions.

### List of references

- 1 -: turbine blade
- 2 -: locking portion
- 3 -: blade airfoil
- 4 -: pockets
- 5 -: cuboid block
- 6 -: rod

## Claims

1. A turbine blade (1), in particular the blade of a turbine engine or a gas turbine, comprising:
- a locking portion (2) and
- an airfoil (3) having a uniform structure, in which there is a plurality of pockets (4) filled with powder,
wherein:
- said plurality of pockets (4) are distributed in the volume of the airfoil (3) in a matrix array, and
- said pockets (4) each comprises:
- at least one cuboid block (5) connected to the airfoil (3), and
- the cuboid blocks (5) placed in the pockets have various dimensions,
- at least one rod (6) connected to the airfoil (3) and/or at least one rod (6) connected to the cuboid block (5).

2. The turbine blade according to claim 1, **characterized in that** both ends of the at least one rod (6) are connected to the airfoil (3).

3. The turbine blade according to claim 1 or 2, **characterized in that** only one end of the rod (6) is connected to the airfoil (3) or to the cuboid block (5).

4. The turbine blade according to claim 1 or 2 or 3, **characterized in that** at least one rod (6) connects the cuboid block (5) to the wall of the pocket (4).

5. The turbine blade according to any of the preceding claims, **characterized in that** the rods (6) are arranged substantially parallel relative to each other.

6. The turbine blade according to any of the preceding claims, **characterized in that** the rods (6) have an openwork structure.

7. The turbine blade according to any of the preceding claims, **characterized in that** the pocket (4) is filled with a pulverized material of which the airfoil (3) is made.

8. The turbine blade according to any of the preceding claims, **characterized in that** the airfoil (3), the cuboid block (5), and the rods (6) form a monolithic element.

9. The turbine blade according to any of the preceding claims, **characterized in that** it is formed using an additive manufacturing technique.

10. The turbine blade according to claim 9, **characterized in that** it is formed using a Laser Powder Bed Fusion (LPBF) technique.

11. The turbine blade according to any of the preceding claims, **characterized in that** it is made of an alloy based on nickel, cobalt, tungsten, aluminium or magnesium.

12. The turbine blade according to any of the claims from 1 to 10, **characterized in that** it is made of steel.

## Patentansprüche

1. Eine Turbinenschaufel (1), insbesondere die Schaufel eines Turbinentriebwerks oder einer Gasturbine, die Folgendes umfasst:
- einen Verriegelungsteil (2) und
- ein Schaufelprofil (3) mit einheitlicher Struktur, in dem sich eine Vielzahl von mit Pulver gefüllten Kammern (4) befindet,
wobei:
- die besagte Vielzahl von Kammern (4) im Volumen des Schaufelprofils (3) in einer matrixförmigen Anordnung verteilt ist, und
- die Kammern (4) jeweils Folgendes umfassen:
- mindestens einen quaderförmigen Block (5), der mit dem Schaufelprofil (3) verbunden ist, und
- die in den Kammern untergebrachten quaderförmigen Blöcke (5) unterschiedliche Abmessungen haben,
- mindestens eine Stange (6), die mit dem Schaufelprofil (3) verbunden ist, und/oder mindestens eine Stange (6), die mit dem quaderförmigen Block (5) verbunden ist.

2. Die Turbinenschaufel nach Anspruch 1, **dadurch gekennzeichnet, dass** die beiden Enden von mindestens einer Stange (6) mit dem Schaufelprofil (3) verbunden sind.

3. Die Turbinenschaufel nach den Ansprüchen 1 oder 2, **dadurch gekennzeichnet, dass** nur ein Ende der Stange (6) mit dem Schaufelprofil (3) oder dem quaderförmigen Block (5) verbunden ist.

4. Die Turbinenschaufel nach den Ansprüchen 1 oder 2 oder 3, **dadurch gekennzeichnet, dass** mindestens eine Stange (6) den quaderförmigen Block (5) mit der Wand der Kammer (4) verbindet.

5. Die Turbinenschaufel nach einem der vorhergehenden Ansprüche, **dadurch gekennzeichnet, dass** die Stangen (6) im Wesentlichen parallel zueinander angeordnet sind.

6. Die Turbinenschaufel nach einem der vorhergehenden Ansprüche, **dadurch gekennzeichnet, dass** die Stangen (6) eine durchbrochene Struktur aufweisen.

7. Die Turbinenschaufel nach einem der vorhergehenden Ansprüche, **dadurch gekennzeichnet, dass** die Kammer (4) mit einem pulverisierten Material gefüllt ist, aus dem das Schaufelprofil (3) hergestellt ist.

8. Die Turbinenschaufel nach einem der vorhergehenden Ansprüche, **dadurch gekennzeichnet, dass** das Schaufelprofil (3), der quaderförmige Block (5) und die Stangen (6) ein monolithisches Element bilden.

9. Die Turbinenschaufel nach einem der vorhergehenden Ansprüche, **dadurch gekennzeichnet, dass** sie durch ein additives Fertigungsverfahren hergestellt wird.

10. Die Turbinenschaufel nach Anspruch 9, **dadurch gekennzeichnet, dass** sie mit dem Verfahren des Pulverbettbasierten Laserstrahlschmelzens (Laser Powder Bed Fusion, LPBF) hergestellt wird.

11. Die Turbinenschaufel nach einem der vorhergehenden Ansprüche, **dadurch gekennzeichnet, dass** sie aus einer Legierung auf der Basis von Nickel, Kobalt, Wolfram, Aluminium oder Magnesium hergestellt wird.

12. Die Turbinenschaufel nach einem der Ansprüche 1 bis 10, **dadurch gekennzeichnet, dass** sie aus Stahl hergestellt wird.

## Revendications

1. Aubage de turbine (1), en particulier l'aube d'un moteur à turbine ou d'une turbine à gaz, comprenant :
- une partie verrouillage (2) et
- un profil aérodynamique (3) ayant une structure uniforme, dans lequel se trouvent plusieurs poches (4) remplies de poudre,
dans lequel :
- ladite pluralité de poches (4) est répartie dans le volume du profil aérodynamique (3) selon un réseau matriciel, et
- lesdites poches (4) comprennent chacune:
- au moins un bloc cubique (5) relié au profil aérodynamique (3), et
- les blocs cubiques (5) placés dans les poches ont des dimensions variées,
- au moins une tige (6) reliée à la voilure (3) et/ou au moins une tige (6) reliée au bloc cubique (5).

2. L'aube de turbine selon la réclamation 1, **caractérisée par le fait que** les deux extrémités de l'au moins une tige (6) sont reliées au profil aérodynamique (3).

3. L'aube de turbine selon la réclamation 1 ou 2, **caractérisée par le fait qu'**une seule extrémité de la tige (6) est reliée au profil aérodynamique (3) ou au bloc cubique (5).

4. L'aube de turbine selon la réclamation 1, 2 ou 3, **caractérisée par le fait qu'**au moins une tige (6) relie le bloc cubique (5) à la paroi de la poche (4).

5. L'aube de turbine selon l'une quelconque des réclamations précédentes, **caractérisée par le fait que** les tiges (6) sont disposées sensiblement parallèlement les unes par rapport aux autres.

6. L'aube de turbine selon l'une quelconque des réclamations précédentes, **caractérisée par le fait que** les tiges (6) ont une structure ajourée.

7. L'aube de turbine selon l'une des réclamations précédentes, **caractérisée par le fait que** la poche (4) est remplie d'un matériau pulvérisé dont est constitué le profil aérodynamique (3).

8. L'aube de turbine selon l'une quelconque des réclamations précédentes, **caractérisée par le fait que** le profil aérodynamique (3), le bloc cubique (5) et les tiges (6) forment un élément monolithique.

9. L'aube de turbine selon l'une des réclamations précédentes, **caractérisée par le fait qu'**elle est formée à l'aide d'une technique de fabrication additive.

10. L'aube de turbine selon la revendication 9, **caractérisée en ce qu'**elle est formée à l'aide d'une technique de Fusion Laser sur Lit de Poudre (LPBF).

11. L'aube de turbine selon l'une quelconque des réclamations précédentes, **caractérisée par le fait qu'**elle est constituée d'un alliage à base de nickel, de cobalt, de tungstène, d'aluminium ou de magnésium.

12. L'aube de turbine selon l'une des réclamations de 1 à 10, **caractérisée par le fait qu'**elle est en acier.
